**Europäisches Patentamt**

**European Patent Office**

**Office européen des brevets**

(11) Veröffentlichungsnummer : **0 379 945 B1**

(12) # EUROPÄISCHE PATENTSCHRIFT

(45) Veröffentlichungstag der Patentschrift :
**05.08.92 Patentblatt 92/32**

(51) Int. Cl.$^5$ : **A01C 17/00**

(21) Anmeldenummer : **90100865.6**

(22) Anmeldetag : **17.01.90**

(54) **Schleuderstreuer.**

(30) Priorität : **24.01.89 DE 3901984
22.07.89 DE 3924275**

(43) Veröffentlichungstag der Anmeldung :
**01.08.90 Patentblatt 90/31**

(45) Bekanntmachung des Hinweises auf die
Patenterteilung :
**05.08.92 Patentblatt 92/32**

(84) Benannte Vertragsstaaten :
**DE FR GB**

(56) Entgegenhaltungen :
**EP-A- 0 073 544
DE-A- 2 363 507**

(73) Patentinhaber : **RAUCH
LANDMASCHINENFABRIK GMBH
W-7573 Sinzheim (DE)**

(72) Erfinder : **Rauch, Norbert
Bergseestrasse 49
W-7573 Sinzheim (DE)**
Erfinder : **Schickinger, Harald
Kunzenäckerle 12
W-7573 Sinzheim (DE)**

(74) Vertreter : **Dr.-Ing. Hans Lichti Dipl.-Ing. Heiner
Lichti Dipl.-Phys. Dr. Jost Lempert
Postfach 41 07 60 Bergwaldstrasse 1
W-7500 Karlsruhe 41 (DE)**

## Beschreibung

Die Erfindung betrifft einen Schleuderstreuer für rieselfähiges Streugut, insbesondere Dünger, bestehend aus einem Vorratsbehälter mit wenigstens einer Auslauföffnung und einer darunter angeordneten, wenigstens einen Wurfflügel aufweisenden Schleuderscheibe, die mittels eines zentrischen Lochs und drehgesicherter Schraubverbindung auf eine Nabe aufgespannt und mittels dieser auf einer zur Auslauföffnung versetzt angeordneten Antriebswelle drehfest aufgesetzt ist.

Schleuderstreuer des vorgenannten Aufbaus sind als Ein oder Zweischeibenstreuer (siehe z.B. EP-A-73544) bekannt. Die hierbei eingesetzten Schleuderscheiben laufen mit regelbarer, insbesondere auch hoher Drehzahl um und müssen deshalb einwandfrei gesichert und befestigt sein. Andererseits müssen die Schleuderscheiben austauschbar sein, um sie entweder im Fall des Verschleißes gegen neue Schleuderscheiben auszuwechseln oder aber gegen Schleuderscheiben auszutauschen, die eine andere Streu-Charakteristik aufweisen, insbesondere für andere Streubreiten geeignet sind, oder auf die Eigenschaften eines anderen Streugutes abgestimmt sind. Die Befestigung der Schleuderscheiben muß demzufolge nicht nur betriebssicher sein, sondern es müssen sich die Schleuderscheiben auch leicht lösen lassen. Schließlich muß die Befestigung dem bei Landmaschinen üblichen robusten Einsatz und den vor allem bei Dünger erhöhten Korrosionsbeanspruchungen gewachsen sein.

Während die eigentliche Schleuderscheibe aus einem relativ dünnwandigen Stahlblech geformt ist, muß die Nabe eine ausreichende Stabilität aufweisen, um die Drehmomente über den gesamten Drehzahlbereich übertragen und die Fliehkräfte aufnehmen zu können. Auch muß sie die entsprechenden Mittel zur Befestigung und Drehsicherung aufweisen, so daß sie nicht unmittelbar aus dem Stahlblech geformt werden kann, sondern als gesondertes stabiles Bauteil ausgebildet sein muß. Dies erfordert entsprechende Maßnahmen, um die Scheibe an der Nabe wirkungsvoll zu befestigen. Bei einer darüberhinaus aus der Praxis bekannten Ausführungsform weist die Nabe im Zentrum einen hochgezogenen Flansch mit dem zentrischen Loch auf, mittels dessen sie auf einen Bund der Nabe aufgesetzt wird. Zur Befestigung dienen entweder die Scheibe durchsetzende und in den Bund eingreifende Schraubbolzen oder aber am Bund angeordnete und die Scheibe nach außen durchgreifende Stehbolzen mit Außengewinde, wobei in der Regel drei Bolzen vorgesehen sind. Auf die Stehbolzen werden dann von außen Hutmuttern aufgeschraubt. Zur Sicherung der Schraubverbindung sind im erstgenannten Fall Sprengringe, im zweiten Fall selbsthemmende Hutmuttern aus Kunststoff vorgesehen. Die Nabe selbst wird auf der Antriebswelle mittels eines Spannstiftes befestigt.

Bei einer anderen bekannten Ausführung ist die eigentliche Schleuderscheibe mit ihrem zentrischen Loch an einer hülsenförmigen Nabe angeschweißt und diese mittels Nut und Feder auf die Antriebswelle drehfest aufgesetzt. Zur axialen Sicherung dient eine Flügelmutter, die von oben in ein Sackloch der Antriebswelle eingeschraubt wird, wobei ferner eine mit der Flügelmutter verbundene Kappe die Nabe außenseitig übergreift. Die Flügelmutter weist keine eigentliche Sicherung, sondern lediglich ein Feingewinde auf.

Beide bekannten Ausführungsformen sind relativ aufwendig in der Fertigung. Sie weisen weiterhin den Nachteil auf, daß die Befestigungsmittel freiliegen und somit den mechanischen und korrosiven Beanspruchungen ausgesetzt sind. Die erstgenannte Ausführung hat darüber hinaus den Nachteil, daß der Austausch der Schleuderscheibe nur mit speziellen Werkzeugen möglich und zudem zeitaufwendig ist, da drei Schrauben bzw. drei Muttern gelöst werden müssen. Die zweitgenannte Ausführung erfordert zwischen Nabe und Antriebswelle einen Paßsitz, der nach einiger Betriebsdauer festklemmt, so daß die Scheibe nach dem Lösen der Flügelmutter häufig nur durch Hammerschläge von der Antriebswelle gelöst werden kann. Ebenso umständlich ist in beiden Fällen die Montage einer neuen Schleuderscheibe.

Der Erfindung liegt die Aufgabe zugrunde, bei einem Schleuderstreuer des eingangs genannten Aufbaus eine konstruktiv und fertigungstechnisch einfache Scheibenbefestigung vorzuschlagen, die darüber hinaus einen schnellen Austausch der Schleuderscheibe ohne Spezialwerkzeuge gestattet und gegen mechanische und korrosive Beanspruchungen unempfindlich ist.

Diese Aufgabe wird erfindungsgemäß dadurch gelöst, daß die Nabe wenigstens einen die Schleuderscheibe exzentrisch durchgreifenden Mitnehmer aufweist, und daß die Schraubverbindung von einem zentrischen Außengewinde an der Nabe und einer mit diesem zusammenwirkenden Hutmutter gebildet ist, die an ihrem Umfang wenigstens eine mit dem Mitnehmer als Drehsicherung federnd zusammenwirkende Raste aufweist.

Die Erfindung geht von dem Prinzip der zum Stand der Technik erstgenannten Ausführung aus, indem die Nabe nicht Teil der Schleuderscheibe ist, sondern ein gesondertes Bauteil, an dem die Schleuderscheibe befestigt wird. Es braucht folglich beim Austausch bzw. Auswechseln der Schleuderscheibe nur die eigentliche Scheibe abgenommen werden, während die Nabe auf der Antriebswelle verbleibt. Sie kann folglich auf jede beliebige Art auf der Antriebswelle drehgesichert und axial gesichert sein. Die Scheibe ist mit ihrem zentrischen Loch auf die Nabe aufgesetzt und mittels lediglich eines exzentrisch angeordneten Mitnehmers auf der Nabe drehgesichert. Dabei kann der Mitnehmer die Scheibe mit Spiel durchgreifen, so daß ein Verklemmen unmög-

2

lich ist. Zur axialen Sicherung und Befestigung der Scheibe braucht die Nabe lediglich ein zentrisches Außengewinde aufzuweisen, auf das die Hutmutter aufgeschraubt wird. Mittels der Hutmutter wird die Scheibe gegen die Nabe verspannt. Zugleich weisen die zuvor beschriebenen Mittel zur Drehsicherung und Befestigung der Scheibe diejenigen Mittel auf, die zur Sicherung der Hutmutter notwendig sind, indem die Hutmutter an ihrem Umfang eine federnd nachgiebige Raste aufweist, die mit dem exzentrisch angeordneten Mitnehmer zusammenwirkt. Für die Drehsicherung der Hutmutter ist also kein gesondertes Bauteil, wie Sprengring od. dgl., notwendig. Da ferner der Mitnehmer eine gewisse axiale Erstreckung aufweisen kann, ist die Drehsicherung - wiederum beispielsweise im Gegensatz zu einem Sprengring - auch dann gewährleistet, wenn die Hutmutter nicht vollständig aufgeschraubt sein sollte. Zudem ist die erfindungsgemäße Ausbildung für den Landwirt kostengünstig, da er lediglich die als einfaches Blechformteil ausgebildeten Scheiben beziehen muß. Schließlich ist die erfindungsgemäße Ausbildung auch über lange Zeiträume betriebssicher und funktionssicher, da die gegen Verschleiß und Korrosion empfindlichen Teile durch die Hutmutter abgedeckt sind.

Darüber hinaus bietet die erfindungsgemäße Ausbildung auch für die praktische Streuarbeit erhebliche Vorteile. Die Qualität des Streubildes wird nämlich maßgeblich davon beeinflußt, wie groß der Anteil derjenigen Streugutpartikel ist, die nach dem Passieren der Auslauföffnung nicht unmittelbar von den Wurfflügeln erfaßt, sondern durch Abprallen an Teilen der umlaufenden Schleuderscheibe als sogenannte Prallverluste anfallen. Diese Streugutpartikel werden nämlich nicht im gewünschten Maße nach außen geschleudert, sondern fallen vorwiegend im mittleren Bereich hinter dem Streuer herunter und führen dort zu einer unerwünschten Streugutverdichtung. Diese Prallverluste sind um so höher, je zahlreicher die Reflexionsmöglichkeiten an der Schleuderscheibe sind. Dies gilt für den zentralen Bereich der Schleuderscheibe für alle vorstehenden Teile, die bei der erfindungsgemäßen Ausbildung mit der Hutmutter auf ein Minimum reduziert sind, wobei selbst die Hutmutter aufgrund ihres zylindrischen Mantels nur wenig Reflexionsflächen bietet.

Eine bevorzugte Ausführungsform zeichnet sich dadurch aus, daß die Hutmutter eine das Innengewinde aufweisende innere Hülse und eine konzentrische, den Mantel bildende äußere Hülse aufweist, zwischen die der Mitnehmer eingreift, und daß am inneren Umfang der äußeren Hülse Rasten angeordnet sind, die mit der radial außen liegenden Kontur des Mitnehmers zusammenwirken.

Bei dieser Ausführungsform übergreift die Hutmutter mit ihrer äußeren Hülse auch den Mitnehmer, so daß auch dieser gegen äußere Einflüsse geschützt ist und als vorragendes Bauteil im Zentrum der Scheibe lediglich die Hutmutter vorhanden ist.

In vorteilhafter Ausgestaltung ist vorgesehen, daß die äußere Hülse an ihrem inneren Umfang mit einer Vielzahl achsparallel verlaufender Vertiefungen versehen ist, deren Kontur der radial außen liegenden Kontur des Mitnehmers entspricht.

Mit dieser Ausbildung ist sichergestellt, daß die Hutmutter in jeder Drehlage, insbesondere auch in ihrer Endlage drehgesichert ist, da eine Vielzahl von Vertiefungen zur Verfügung steht, um mit der äußeren Kontur des Mitnehmers in Eingriff zu kommen. Selbst wenn in der Endlage dieser Eingriff nicht stattfindet, so könnte sich die Hutmutter allenfalls so weit verdrehen, bis der Mitnehmer in die nächste Vertiefung einrastet. Die äußere Hülse kann in ihrer vom Material abhängig gewählten Wandstärke so ausgebildet sein, daß sie radial ausreichend federnd nachgeben kann.

Eine besonders günstige Ausgestaltung ergibt sich dann, wenn der Mitnehmer ein zylindrischer Zapfen ist und die Vertiefungen an der äußeren Hülse als flache teilzylindrische Rinnen ausgebildet sind. Der Innenumfang der äußeren Hülse ist bei dieser Ausgestaltung also im wesentlichen wellenförmig ausgebildet, wobei die nach innen ragenden Erhöhungen dem Benutzer am Ende der Schraubbewegung sensitiv anzeigen, ob eine Verrastung stattgefunden hat.

Gemäß einem anderen Ausführungsbeispiel kann vorgesehen sein, daß der Mitnehmer an seiner radial außen liegenden Kontur eine Abflachung aufweist und die äußere Hülse an ihrem inneren Umfang als Vielflächner ausgebildet ist. Bei dieser Ausführung findet eine Verrastung stets dann statt, wenn eine der Flächen am inneren Umfang der äußeren Hülse der außen liegenden Abflachung des Mitnehmers anliegt.

In weiterhin vorteilhafter Ausgestaltung ist vorgesehen, daß die axiale Erstreckung des Mitnehmers um wenigstens ein bis drei Gewindegänge kürzer ist als die axiale Erstreckung des Außengewindes an der Nabe. Mit axialer Erstreckung ist nicht die absolute Länge in axialer Richtung gemeint, sondern nur die axiale Ausdehnung zueinander. Mit der zuvor zitierten Ausführung ist gewährleistet, daß beim Aufschrauben der Mutter zunächst das Gewinde über ein bis drei Gänge in Eingriff kommt, bevor die Rasten mit dem Mitnehmer in Eingriff kommen. Dadurch wird ein Verkippen der Mutter aufgrund der beim Verrasten wirksamen Radialkräfte vermieden.

Der gleiche Vorteil ergibt sich, wenn stattdessen die axiale Erstreckung der Rasten von der freien Stirnseite der Hutmutter um wenigstens ein bis drei Gewindegänge kürzer ist als die axiale Erstreckung des Innengewindes an der Hutmutter.

Es ist weiterhin von Vorteil, wenn das Innengewinde mit axialem Abstand von der freien Stirnseite der Hülse zur Bildung einer führenden und zentrierenden Zylinderfläche, deren Innendurchmesser wenig größer als der Außendurchmesser des Innengewindes ist, angesetzt.

Durch die Ausbildung der Zylinderfläche vor dem Innengewinde kann die Hutmutter auf das Außengewinde selbstzentrierend aufgesetzt werden, so daß das Innengewinde einwandfrei in das Außengewinde einläuft. Als zweckmäßig hat sich erwiesen, wenn die axiale Länge der Zylinderfläche wenigstens einem Drittel der axialen Länge des Innengewindes entspricht.

Im allgemeinen kann die Hutmutter von Hand aufgeschraubt und abgeschraubt werden, da die Angriffsfläche relativ groß ist. Da jedoch aufgrund der zuvor beschriebenen und zu vermeidenden Prallverluste der Mantel der Hutmutter glattwandig, also insbesondere keine Profilierung aufweisen sollte, die das Schrauben von Hand erleichtern würde, zeichnet sich ein weiteres Ausführungsbeispiel dadurch aus, daß die Hutmutter an ihrer oberen Stirnseite eine diametral verlaufende rinnenförmige Vertiefung zum Ansetzen eines Werkzeugs aufweist.

Dem gleichen Zweck der Erleichterung des Schraubvorgangs dient die Maßnahme, daß die Hutmutter an ihrer oberen Stirnseite einen Knebel aufweist, so daß die Hutmutter durch Angreifen am Knebelgriff aufgeschraubt bzw. abgeschraubt werden kann.

Bei dieser Ausführungsform kann der Knebel die rinnenförmige Vertiefung aufweisen, in die gegebenenfalls mit einem entsprechenden stabförmigen oder leistenförmigen Hilfswerkzeug, im einfachsten Fall mit einem in die Rinne längs eingelegten Schraubenzieher eingegriffen werden kann.

Vorzugsweise besteht die Hutmutter aus Kunststoff, vorzugsweise einem glasfaserverstärkten Kunststoff, der vor allem gegen korrosive Beanspruchungen unempfindlich ist. Er gestattet es auch ohne weiteres, die notwendige Federwirkung an der äußeren Hülse zu erhalten. In diesem Fall ist es zweckmäßig, wenn die innere Hülse auf der axialen Länge des Innengewindes an ihrem äußeren Mantel mit einer versteifenden Manschette versehen ist, um ein Ausreißen des Innengewindes bzw. der das Innengewinde aufweisenden Hülse zu vermeiden. Dabei kann die Manschette aus Stahl bestehen.

Da die Hutmutter einen relativ großen Außendurchmesser aufweist, gibt die Erfindung weiterhin die Möglichkeit, den bzw. die Wurfflügel mit ihrem inneren Ende am Mantel der Hutmutter anliegen zu lassen mit der Folge, daß die Prallverluste durch nach innen reflektierte Streugutpartikel besonders gering ist, indem die Wurfflügel an ihrer Innenseite durch die Hutmutter praktisch abgeschlossen sind.

Nachstehend ist die Erfindung anhand von in der Zeichnung wiedergegebenen Ausführungsbeispielen beschrieben. In der Zeichnung zeigen:

Figur 1 eine schematische, abgebrochene Ansicht eines Schleuderstreuers;

Figur 2 einen Axialschnitt einer Schleuderscheibe;

Figur 3 eine Ansicht auf die Innenseite der Hutmutter und

Figur 4 einen der Fig. 2 entsprechenden Schnitt einer anderen Ausführungsform der Hutmutter.

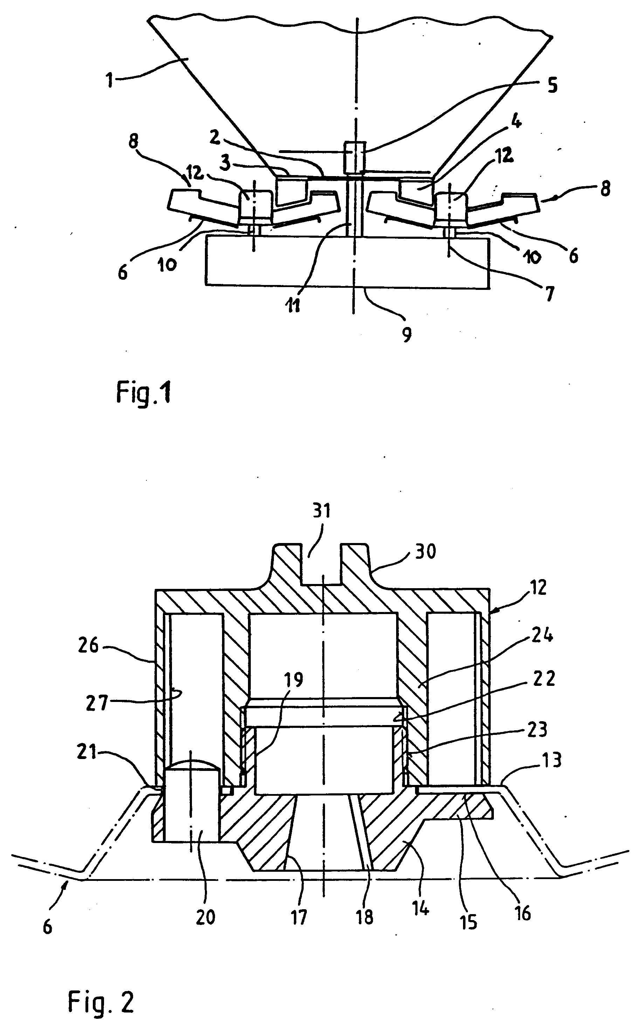

Der in Figur 1 gezeigte Schleuderstreuer, der beispielsweise vom Dreipunktgestänge eines Schleppers aufgenommen wird, weist einen trichterförmigen Vorratsbehälter 1 auf, der unterseitig durch einen horizontalen Boden 2 abgeschlossen ist. Der Boden weist zwei etwa diametral gegenüberliegende Auslauföffnungen 3 und daran anschließende Auslaufschächte 4 auf. Innerhalb des Vorratsbehälters 1 läuft ein Rührwerk 5 um, das den innerhalb des Vorratsbehälters 1 befindlichen Dünger auflockert und für einen einwandfreien Zulauf des Düngers zu den Auslauföffnungen 3 sorgt.

Unterhalb des Vorratsbehälters 1 sind zwei Schleuderscheiben 6 angeordnet, von denen jede einer Auslauföffnung 3 bzw. einem Auslaufschacht 4 zugeordnet ist. Jede Schleuderscheibe 6 ist mit ihrer Achse 7 gegenüber dem Auslaufschacht 4 nach außen versetzt und weist beim gezeigten Ausführungsbeispiel zwei Wurfflügel 8 auf, die sich vom Zentrum der Scheibe nach außen erstrecken.

Der Antrieb des Rührwerks 5 und der Schleuderscheiben 6 erfolgt beispielsweise von der Zapfwelle des Schleppers über einen mit 9 angedeuteten Getriebeblock sowie über die Antriebswellen 10 für die Schleuderscheiben und die Antriebswelle 11 für das Rührwerk 5. Die Schleuderscheiben 6 sind zu diesem Zweck mit Hutmuttern 12 auf den Antriebswellen 10 befestigt, wie dies in Figur 2 näher dargestellt ist.

Die Schleuderscheibe 6 ist als Blechformteil ausgebildet, das in seinem Zentrum zu einer Art Kappe 13 ausgeformt ist. Die Kappe 13 weist ein zentrisches Loch auf, mittels dessen die Schleuderscheibe 6 auf eine Nabe 14 aufgesetzt ist, die zu diesem Zweck einen Bund 15 mit einem entsprechenden Sitz 16 aufweist. Die Nabe 14 ist mittels eines Konus 17 auf die in Figur 2 nicht gezeigte Antriebswelle 10 (Figur 1) aufgesetzt und über eine Nut-Federverbindung 18 drehfest mit der Antriebswelle verbunden.

Zur axialen Sicherung kann eine von oben in den zylindrischen Ansatz 19 eingesenkte Schraube dienen.

Am Bund 15 der Nabe 14 ist ein Mitnehmer 20 in Form eines zylindrischen Zapfens angeordnet, der ein exzentrisches Loch 21 im Bereich der Kappe 13 der Schleuderscheibe 6 durchgreift. Der Mitnehmer 20 stellt die notwendige drehfeste Verbindung zwischen der Nabe 14 und der Schleuderscheibe 6 her.

Zum Aufspannen der Schleuderscheibe 6 auf die Nabe 14 dient die bereits erwähnte Hutmutter 12, die mit Innengewinde 22 versehen ist, das mit einem Außengewinde 23 an dem zylindrischen Ansatz 19 der Nabe 14 zusammenwirkt. Durch Aufschrauben der Hutmutter 12 auf das Außengewinde 23 wird die Schleuderscheibe 6 zwischen der Stirnseite der Hutmutter und dem Sitz 16 am Bund 15 eingespannt.

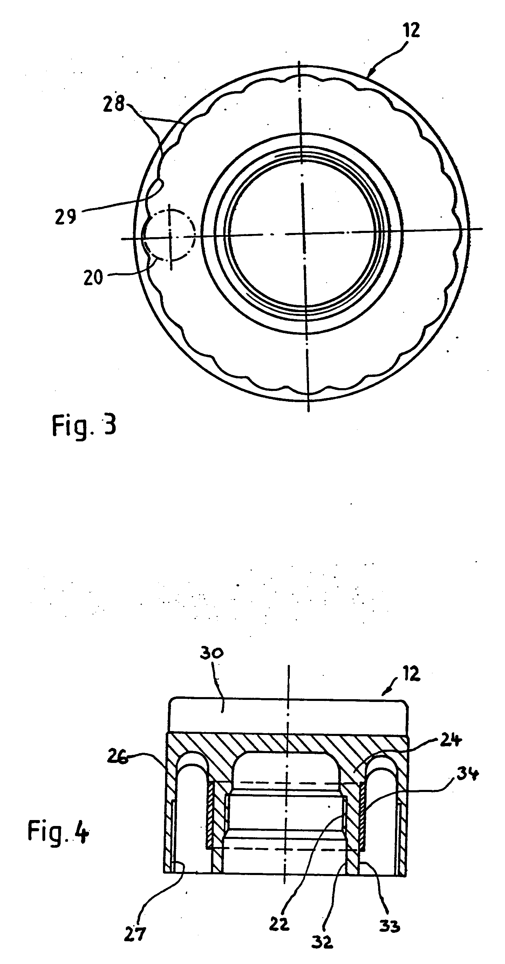

Um die Hutmutter 12 gegen Lösen zu sichern, weist sie neben der das Innengewinde 22 aufweisenden inneren Hülse 24 eine konzentrische äußere Hülse 26 auf, die an ihrem inneren Umfang mit einem Rastprofil 27 versehen ist. Dieses Rastprofil kann, wie Figur 3 zeigt, aus einer Vielzahl achsparallel verlaufender teilzylindrischer Vertiefungen 28 gebildet sein, deren Kontur der radial außen liegenden Kontur des Mitnehmers 20 entspricht. Während die Vertiefungen 28 an ihrer tiefsten Stelle auf einem Radius liegen, der demjenigen des am weitesten außen liegenden Scheitels des Mitnehmers 20 entspricht (siehe Figur 3) liegen die zwischen den Vertiefungen befindlichen Erhöhungen 29 auf einem kleineren Radius mit der Folge, daß jede Vertiefung als eine Art Raste für den Mitnehmer 20 wirkt. Diese Raste ist zudem federnd nachgiebig, da die äußere Hülse 26 entsprechend dünnwandig ausgebildet ist und radial ausweichen kann.

Um das Befestigen und Lösen der Hutmutter 12 zu erleichtern, kann diese an ihrer oberen Stirnseite einen Ansatz 30, z. B. in Form eines sich diametral erstreckenden Knebels aufweisen, der weiterhin mit einer rinnenförmigen Vertiefung 31 versehen sein kann, in den beispielsweise der Schaft eines Schraubenziehers eingelegt werden kann.

Die Hutmutter 12 ist, wie insbesondere aus Figur 3 ersichtlich, an ihrem Mantel zylindrisch und glattwandig ausgebildet. Ferner reichen die Wurfflügel 8, wie Figur 1 zeigt, mit ihrem inneren Ende bis an den Mantel der Hutmutter 12, so daß die in der Regel aus einem U-Profil gebildeten Wurfflügel an ihrer Innenseite abgeschlossen sind.

Bei der Ausführungsform gemäß Figur 4 ist vor dem Innengewinde 22 eine längere Zylinderfläche 32 vorgesehen, die beim Aufschrauben der Hutmutter als Führungs- und Zentrierfläche dient. An der Innenhülse 24 ist außenseitig eine vorzugsweise gleichfalls zylindrische Fläche 33 vorgesehen. Auf einem Teil der axialen Erstreckung dieser Hülse ist eine Manschette 34 aus Stahl aufgezogen, die die Hülse armiert und selbst im Falle eines Ausreißens des Innengewindes 22 oder der Hülse für einen sicheren Halt sorgt.

Der Mitnehmer 20 ist, wie Figur 2 zeigt, nennenswert kürzer als das Außengewinde 23 der Nabe, so daß erst dieses in Eingriff kommt, bevor der Mitnehmer 20 mit den Rasten 27 zusammenwirkt.

## Patentansprüche

1. Schleuderstreuer für rieselfähiges Streugut, insbesondere Dünger, bestehend aus einem Vorratsbehälter mit wenigstens einer Auslauföffnung und einer darunter angeordneten, wenigstens einen Wurfflügel aufweisenden Schleuderscheibe (6), die mittels eines zentrischen Lochs und drehgesicherter Schraubverbindung (23) auf eine Nabe (14) aufgespannt und mittels dieser auf einer zur Auslauföffnung versetzt angeordneten Antriebswelle drehfest aufgesetzt ist, dadurch gekennzeichnet, daß die Nabe (14) wenigstens einen die Schleuderscheibe (6) exzentrisch durchgreifenden Mitnehmer (20) aufweist, und daß die Schraubverbindung von einem zentrischen Außengewinde (23) an der Nabe (14) und einer mit diesem zusammenwirkenden Hutmutter (12) gebildet ist, die an ihrem Umfang wenigstens eine mit dem Mitnehmer (20) als Drehsicherung federnd zusammenwirkende Raste (27) aufweist.

2. Schleuderstreuer nach Anspruch 1, dadurch gekennzeichnet, daß die Hutmutter (12) eine das Innengewinde (22) aufweisende innere Hülse (24) und eine konzentrische, den Mantel bildende äußere Hülse (26) aufweist, zwischen die der Mitnehmer (20) eingreift, und daß am inneren Umfang der äußeren Hülse Rasten (27) angeordnet sind, die mit der radial außen liegenden Kontur des Mitnehmers zusammenwirken.

3. Schleuderstreuer nach Anspruch 1 oder 2, dadurch gekennzeichnet, daß die äußere Hülse (26) an ihrem inneren Umfang mit einer Vielzahl achsparallel verlaufender Vertiefungen (28) versehen ist, deren Kontur der radial außen liegenden Kontur des Mitnehmers (20) entspricht.

4. Schleuderstreuer nach einem der Ansprüche 1 bis 3, dadurch gekennzeichnet, daß der Mitnehmer (20) ein zylindrischer Zapfen ist und die Vertiefungen (28) an der äußeren Hülse (26) als flache teilzylindrische Rinnen ausgebildet sind.

5. Schleuderstreuer nach einem der Ansprüche 1 bis 3, dadurch gekennzeichnet, daß der Mitnehmer (20) an seiner radial außen liegenden Kontur eine Abflachung aufweist und die äußere Hülse (26) an ihrem inneren Umfang als Vielflächner ausgebildet ist.

6. Schleuderstreuer nach einem der Ansprüche 1 bis 5, dadurch gekennzeichnet, daß die axiale Erstreckung des Mitnehmers (20) um wenigstens ein bis drei Gewindegänge kürzer ist als die axiale Erstreckung des Außengewindes (23) an der Nabe (14).

7. Schleuderstreuer nach einem der Ansprüche 1 bis 6, dadurch gekennzeichnet, daß die axiale Erstreckung der Rasten (27) von der freien Stirnseite der Hutmutter (12) um wenigstens ein bis drei Gewindegänge kürzer ist als die axiale Erstreckung des Innengewindes (22) an der Hutmutter (12).

8. Schleuderstreuer nach einem der Ansprüche 1 bis 7, dadurch gekennzeichnet, daß das Innengewinde (22) mit axialem Abstand von der freien Stirnseite der Hülse (24) zur Bildung einer führenden und zentrierenden Zylinderfläche (32), deren Innendurchmesser wenig größer als der Außendurchmesser des Innengewindes ist, ansetzt.

9. Schleuderstreuer nach einem der Ansprüche 1 bis 8, dadurch gekennzeichnet, daß die axiale Länge der Zylinderfläche (32) wenigstens einem Drittel der axialen Länge des Innengewindes (22) entspricht.

10. Schleuderstreuer nach einem der Ansprüche 1 bis 9, dadurch gekennzeichnet, daß die Hutmutter (12) an ihrer oberen Stirnseite eine diametral verlaufende rinnenförmige Vertiefung (31) zum Ansetzen eines Werkzeugs aufweist.

11. Schleuderstreuer nach einem der Ansprüche 1 bis 10, dadurch gekennzeichnet, daß die Hutmutter (12) an ihrer oberen Stirnseite einen Knebel (30) aufweist.

12. Schleuderstreuer nach einem der Ansprüche 1 bis 11, dadurch gekennzeichnet, daß der Knebel (30) die rinnenförmige Vertiefung (31) aufweist.

13. Schleuderstreuer nach einem der Ansprüche 1 bis 12, dadurch gekennzeichnet, daß die Hutmutter (12) aus Kunststoff gebildet ist.

14. Schleuderstreuer nach einem der Ansprüche 1 bis 13, dadurch gekennzeichnet, daß die Hutmutter (12) aus glasfaserverstärktem Kunststoff besteht.

15. Schleuderstreuer nach einem der Ansprüche 1 bis 14, dadurch gekennzeichnet, daß die innere Hülse (24) auf der axialen Länge des Innengewindes (22) an ihrem äußeren Mantel (33) mit einer versteifenden Manschette (34) versehen ist.

16. Schleuderstreuer nach Anspruch 15, dadurch gekennzeichnet, daß die Manschette (34) aus Stahl besteht.

17. Schleuderstreuer nach einem der Ansprüche 1 bis 16, dadurch gekennzeichnet, daß die Wurfflügel (8) mit ihrem inneren Ende am Mantel der Hutmutter (12) anliegen.


## Claims

1. Centrifugal distributor for free-flowing broadcasting material, particularly fertilizer, comprising a storage container with at least one discharge opening and a centrifugal disk (6) positioned below it, having at least one throwing blade and being fixed to a hub (14) by means of a central hole and a rotationally secured screw connection (23), by which the disc is mounted in a non-rotary manner on a driving shaft displaced with respect to the discharge opening, characterized in that the hub (14) has at least one driver (20) eccentrically passing through the centrifugal disk (6) and that the screw connection is formed by a central external thread (23) on the hub (14) and by a cap nut (12) cooperating therewith and having on its circumference at least one notch (27) resiliently cooperating with the driver (20) as a rotation preventing means.

2. Centrifugal distributor according to claim 1, characterized in that the cap nut (12) has an inner sleeve (24) having the internal thread (22) and a concentric, outer sleeve (26) forming the jacket and between which engages the driver (20) and that on the inner circumference of the outer sleeve are provided notches (27), which cooperate with the radially outer contour of the driver.

3. Centrifugal distributor according to claims 1 or 2, characterized in that the outer sleeve (26) has on its inner circumference a plurality of axially parallel depressions (28), whose contour corresponds to the radially outer contour of the driver (20).

4. Centrifugal distributor according to one of the claims 1 to 3, characterized in that the driver (20) is a cylindrical pin and the depressions (28) on the outer sleeve (26) are constructed as flat, partially cylindrical channels.

5. Centrifugal distributor according to one of the claims 1 to 3, characterized in that the driver (20) has on its radially outer contour a flattened portion and the outer sleeve (26) is constructed on its inner circumference as a polyhedron.

6. Centrifugal distributor according to one of the claims 1 to 5, characterized in that the axial extension of the driver (20) is shorter by at least one to three turns of the thread than the axial extension of the external thread (23) on the hub (14).

7. Centrifugal distributor according to one of the claims 1 to 6, characterized in that the axial extension of the notches (27) from the free end face of the cap nut (12) is shorter by at least one to three turns than the axial extension of the internal thread (22) on the cap nut (12).

8. Centrifugal distributor according to one of the claims 1 to 7, characterized in that the inner thread (22) is located at an axial distance from the free end face of the sleeve (24) for forming a guiding and centering cylindrical surface (32), whose internal diameter is slightly larger than the external diameter of the internal thread.

9. Centrifugal distributor according to one of the claims 1 to 8, characterized in that the axial length of the cylindrical surface (32) corresponds to at least one third of the axial length of the internal thread (22).

10. Centrifugal distributor according to one of the claims 1 to 9, characterized in that the cap nut (12) has on its upper end face a diametrically directed channel-like depression (31) for the application of a tool.

11. Centrifugal distributor according to one of the claims 1 to 10, characterized in that the cap nut (12) has on its upper end face a locking handle (30).

12. Centrifugal distributor according to one of the claims 1 to 11, characterized in that the locking handle (30) has the channel-like depression (31).

13. Centrifugal distributor according to one of the claims 1 to 12, characterized in that the cap nut (12) is made from plastic.

14. Centrifugal distributor according to one of the claims 1 to 13, characterized in that the cap nut (12) is made from glass fibre-reinforced plastic.

15. Centrifugal distributor according to one of the claims 1 to 14, characterized in that over the axial length of the internal thread (22) the inner sleeve (24) is provided on its outer jacket (33) with a reinforced collar (34).

16. Centrifugal distributor according to claim 15, characterized in that the collar (34) is made from steel.

17. Centrifugal distributor according to one of the claims 1 to 16, characterized in that the throwing blade (8) abuts with its inner end the jacket of the cap nut (12).


**Revendications**

1. Epandeur centrifuge pour des matières coulantes à répandre, en particulier de l'engrais, comprenant un réservoir de stockage avec au moins une ouverture de sortie sous laquelle est disposé au moins un disque d'épandage (6) muni d'au moins une ailette d'éjection, qui est fixé, au moyen d'un trou central et d'un raccord à vis (23) bloqué en rotation, sur un moyeu (14) à l'aide duquel il est monté de manière solidaire en rotation sur un arbre moteur déporté par rapport à l'ouverture de sortie, caractérisé en ce que le moyeu (14) comprend au moins un toc d'entraînement (20) traversant excentriquement le disque d'épandage (6), et que le raccord à vis est constitué par un filetage extérieur (23) central sur le moyeu (14) et par un écrou borgne (12) coopérant avec ledit filetage et présentant sur sa périphérie au moins un cran d'arrêt (27) qui coopère élastiquement avec ledit toc d'entraînement (20) pour le blocage en rotation.

2. Epandeur centrifuge selon la revendication 1, caractérisé en ce que l'écrou borgne (12) comprend une douille intérieure (24) munie du filetage intérieur (22) et une douille extérieure (26) concentrique qui forme l'enveloppe, entre lesquelles s'engage le toc d'entraînement (20), et qu'à la périphérie intérieure de la douille extérieure sont disposés des crans d'arrêt (27) qui coopèrent avec le contour du toc d'entraînement situé radialement à l'extérieur.

3. Epandeur centrifuge selon l'une des revendications 1 ou 2, caractérisé en ce que la douille extérieure (26) comporte sur sa périphérie intérieure une pluralité de creux (28) orientés parallèlement à l'axe et dont le contour correspond au contour radialement extérieur du toc d'entraînement (20).

4. Epandeur centrifuge selon l'une des revendications 1 à 3, caractérisé en ce que le toc d'entraînement (20) est conformé en tourillon cylindrique et que les creux (28) sur la douille extérieure (26) sont réalisés sous la forme de gorges peu profondes et partiellement cylindriques.

5. Epandeur centrifuge selon l'une des revendications 1 à 3, caractérisé en ce que le toc d'entraînement (20) présente un méplat sur son contour radialement extérieur et que la circonférence de la douille extérieure (26) est conformée en polygone.

6. Epandeur centrifuge selon l'une des revendications 1 à 5, caractérisé en ce que l'extension axiale du toc d'entraînement (20) est plus courte d'au moins une à trois spires que l'extension axiale du filetage extérieur (23) sur le moyeu (14).

7. Epandeur centrifuge selon l'une des revendications 1 à 6, caractérisé en ce que l'extension axiale des crans d'arrêt (27) à partir de la face frontale libre de l'écrou borgne (12) est plus courte d'au moins une à trois spires que l'extension axiale du filetage intérieur (22) sur l'écrou borgne (12).

8. Epandeur centrifuge selon l'une des revendications 1 à 7, caractérisé en ce que le filetage intérieur (22) commence à distance axiale de la face frontale libre de la douille (24) pour la formation d'une surface cylindrique (32) de guidage et de centrage dont le diamètre intérieur est légèrement plus grand que le diamètre extérieur du filetage intérieur.

9. Epandeur centrifuge selon l'une des revendications 1 à 8, caractérisé en ce que la longueur axiale de la surface cylindrique (32) correspond au moins à un tiers de la longueur axiale du filetage intérieur (22).

10. Epandeur centrifuge selon l'une des revendications 1 à 9, caractérisé en ce que l'écrou borgne (12) présente sur sa face frontale supérieure un creux (31) diamétral en forme de gorge destiné au raccordement d'un outil.

11. Epandeur centrifuge selon l'une des revendications 1 à 10, caractérisé en ce que l'écrou borgne (12) est muni sur sa face frontale supérieure d'un garrot (30).

12. Epandeur centrifuge selon l'une des revendications 1 à 11, caractérisé en ce que le garrot (30) présente un creux (31) en forme de gorge.

13. Epandeur centrifuge selon l'une des revendications 1 à 12, caractérisé en ce que l'écrou borgne (12) est réalisé en matière plastique.

14. Epandeur centrifuge selon l'une des revendications 1 à 13, caractérisé en ce que l'écrou borgne (12) est réalisé en matière plastique renforcée par des fibres de verre.

15. Epandeur centrifuge selon l'une des revendications 1 à 14, caractérisé en ce que la douille intérieure (24) est munie sur la longueur axiale du filetage intérieur (22) sur son enveloppe extérieure (33), d'un manchon raidisseur (34).

16. Epandeur centrifuge selon la revendication 15, caractérisé en ce que le manchon (34) est réalisé en acier.

17. Epandeur centrifuge selon l'une des revendications 1 à 16, caractérisé en ce que les ailettes d'éjection (8) sont appliquées avec leur extrémité intérieure contre l'enveloppe de l'écrou borgne (12).

Fig.1

Fig. 2

Fig. 3

Fig. 4